# EUROPÄISCHE PATENTSCHRIFT

(11) **EP 3 529 192 B1**
(45) Veröffentlichungstag und Bekanntmachung des Hinweises auf die Patenterteilung: **01.12.2021**
(21) Anmeldenummer: 17784959.3
(22) Anmeldetag: 18.10.2017
(51) Int. Cl.: B66C 13/12, B66C 17/00, B66C 9/14, H02J 7/14, H02J 7/35

(54) **LAUFKRAN**
OVERHEAD TRAVELLING CRANE
PONT ROULANT

(30) Priorität: 21.10.2016 DE 102016120115
(43) Veröffentlichungstag der Anmeldung: 28.08.2019
(73) Patentinhaber: Konecranes Global Corporation, 05830 Hyvinkää (FI)
(72) Erfinder: DOWY, Lutz, 58640 Iserlohn (DE)
(74) Vertreter: Moser Götze & Partner Patentanwälte mbB
(86) Internationale Anmeldenummer: PCT/EP2017/076542
(87) Internationale Veröffentlichungsnummer: WO 2018/073279

(56) Entgegenhaltungen:
- EP-A1- 2 345 619
- EP-A1- 2 354 075
- CN-A- 105 692 462
- CN-U- 205 419 564
- GB-A- 2 455 499

## Beschreibung

Die Erfindung betrifft einen Laufkran gemäß dem Oberbegriff von Anspruch 1. Ein solcher Laufkran ist aus der EP 2 838 830 B1 bekannt.

Die Kranbahn derartiger Laufkrane umfasst zumindest zwei ortsfeste und als Fahrschiene dienende Profilträger. Die Fahrschienen erstrecken sich voneinander beabstandet und parallel zueinander in horizontaler Fahrtrichtung des Laufkrans und sind hoch oberhalb eines Flurbodens angeordnet. Jeder Profilträger bildet hierbei mindestens eine Lauffläche der Kranbahn aus, auf denen ein entsprechender Laufkran über seine Fahrwerke geführt und somit spurgebunden beziehungsweise schienengebunden verfahrbar ist.

Es werden zahlreiche Typen von Laufkranen unterschieden. Bei Brückenkranen und Hängekranen sind die Fahrwerke im Bereich der sich gegenüberliegenden Enden des sich horizontal und quer zur Fahrtrichtung erstreckenden Kranträgers angeordnet. Die Fahrschienen liegen hierbei üblicherweise in einer gemeinsamen horizontalen Ebene. Bei Wandlaufkranen, sind die Fahrschienen im Wesentlichen vertikal übereinander angeordnet und an einer Tragkonstruktion befestigt, die Bestandteil einer Wand oder freistehend sein kann. An dem nicht auskragenden Ende des Kranträgers von Wandlaufkranen ist ein konsolenartiger Tragkörper angeordnet. An dem Tragkörper sind mehrere Fahrwerke angebracht, über die sich der auch als Wandlaufkran bezeichnete Konsolkran an den oberen und unteren Fahrschienen abstützt.

Auch schienengebundene Portalkrane stellen Laufkrane dar. Im Gegensatz zu den obigen Laufkranen sind die Fahrschienen von Portalkranen jedoch üblicherweise im Bereich des Flurbodens angeordnet, wobei die Fahrschienen auf dem Flurboden aufliegen oder teilweise in den Flurboden eingebettet sein können. Der hoch oberhalb des Flurbodens angeordnete Kranträger ist von Portalstützen aufgeständert, die an den gegenüberliegenden Enden des Kranträgers angreifen. Die Fahrwerke sind an den der jeweiligen Fahrschiene zugewandten Enden der Portalstützen angeordnet.

Laufkrane können sowohl im Freien außerhalb eines Gebäudes oder innerhalb eines Gebäudes wie beispielsweise eine Werkhalle installiert und eingesetzt werden. In letzterem Fall ist auch die Bezeichnung Hallenkran üblich.

Entsprechende entlang einer ortsfesten Kranbahn spurgebunden beziehungsweise schienengebunden verfahrbare Laufkrane beziehungsweise deren Antriebe sind während des Betriebs üblicherweise permanent mit einer externen Energiequelle, beispielsweise dem örtlichen öffentlichen Stromversorgungsnetz, verbunden, um hierüber mit der benötigen elektrischen Energie versorgt zu werden. Die hierfür erforderliche elektrische Verbindung kann über eine ortsfeste Schleifleitung und an dem Laufkran angeordnete Stromabnehmer hergestellt werden, die beim Verfahren des Krans mitbewegt werden und hierbei stets in leitendem Kontakt mit der Schleifleitung sind. Alternativ kann die elektrische Verbindung auch kabelgebunden über eine Energiekette erfolgen. Die Schleifleitung beziehungsweise die Energiekette verläuft hierbei in der Regel entlang der Kranbahn beziehungsweise Fahrschienen, um während des Betriebs des Laufkrans auch während des Verfahrens entlang der Kranbahn eine permanente elektrische Verbindung zwischen den Antrieben und der externen elektrischen Energiequelle sicherzustellen. Dies erfordert einen entsprechend hohen konstruktiven Aufwand zur Herstellung der permanenten elektrischen Verbindung. Ein derartiger schienengebunden verfahrbarer Laufkran mit kabelgebundener Stromversorgung ist aus der Offenlegungsschrift DE 103 23 025 A1 bekannt.

Von dem französischen Unternehmen COMEGE SAS ist ein Portalkran bekannt (abrufbar über http://www.comege.fr/en/products/gantry-cranes/PORTMOT-en), der über seinen elektrischen Fahrantrieb auf einem Flurboden nicht-schienengebunden und somit frei verfahrbar ist. Entlang eines sich horizontal erstreckenden Kranträgers des Portalkrans ist eine Krankatze verfahrbar, die einen Kettenzug trägt. Der Portalkran kann mit Batterien ausgerüstet werden, über die der Fahrantrieb, der Katzantrieb und der Hubantrieb des Kettenzugs gespeist werden können.

Auf einem Flurboden frei verfahrbare Portalkrane mit batteriebetriebenen Antrieb sind auch aus der EP 2 354 075 A1 und der EP 2 345 619 A1 bekannt. Die chinesischen Druckschriften CN 105 692 A und CN 205 419 564 U offenbaren ebenfalls frei verfahrbare Portalkrane.

Aus der GB 2 455 499 A ist ein Turmdrehkran bekannt, der einen Hybridantrieb mit einer Verbrennungsmotor-Generator-Einheit und einer Batterie umfasst. Die Batterie kann mittels der Verbrennungsmotor-Generator-Einheit oder mittels auf dem Kranausleger angeordneten Solarzellen geladen werden.

Die Ausstattung eines Turmdrehkrans mit einer Batterie ist auch aus der EP 2 330 069 A1 bekannt.

Aus der DE 87 11 705 U1 ist eine batteriebetriebene Transfer- und Fortbewegungshilfsvorrichtung für Personen bekannt. Eine vergleichbare Hilfsvorrichtung für Personen in Form eines dreidimensionalen Lifts ist aus der US 4 243 147 bekannt.

Der Erfindung liegt die Aufgabe zugrunde, einen verbesserten Laufkran bereit zu stellen, bei dem zur Energieversorgung des Laufkrans entlang der Kranbahn keine Schleifleitung oder Energiekette vorhanden sein muss.

Diese Aufgabe wird durch einen Laufkran mit den Merkmalen des Anspruchs 1 gelöst. In den Ansprüchen 2 bis 7 sind vorteilhafte Ausgestaltungen der Erfindung angegeben.

Ein Laufkran mit einem sich horizontal erstreckenden Kranträger, der entlang einer Kranbahn schienengebunden verfahrbar ist, wobei die Kranbahn ortsfeste und als Fahrschiene dienende Profilträger umfasst, die Fahrschienen sich voneinander beabstandet und parallel zueinander in horizontaler Fahrtrichtung des Laufkrans erstrecken und hoch oberhalb eines Flurbodens angeordnet sind, und mit einer Krankatze, die entlang des Kranträgers verfahrbar ist und ein Hebezeug zum Heben und Senken einer Last trägt, wobei das Hebezeug ein als Seil oder Kette ausgebildetes Tragmittel aufweist und der Laufkran elektrische Antriebe für Bewegungen des Laufkrans aufweist, wird dadurch verbessert, dass der Laufkran einen Energiespeicher aufweist, der mit den Antrieben verbunden ist, um die Antriebe mit Energie zu versorgen und dass eine Ladestation vorgesehen ist, die von dem Laufkran so anfahrbar ist, dass der Energiespeicher bei Bedarf Energie von der Ladestation beziehen kann, wenn der Laufkran in der Ladestation ist, wobei die Ladestation Energie von einer externen Energiequelle bezieht, die ein Solarmodul und/oder ein öffentliches Stromversorgungsnetz umfasst, und dass ein zweiter Energiespeicher vorgesehen ist, der mit der Ladestation und der externen Energiequelle verbunden ist, um von der externen Energiequelle Energie zu beziehen, zu speichern und über die Ladestation an den Energiespeicher des Laufkrans abzugeben. Dies erspart die Installation von Schleifleitungen, Kabelverbindungen oder Energieketten, die bisher entlang der Kranbahn geführt werden mussten, um im laufenden Betrieb eine permanente Verbindung zwischen dem internen Energieversorgungsnetz des Laufkrans und einer ortsfesten externen Energiequelle aufrechtzuerhalten. Der Energiespeicher umfasst vorzugsweise eine oder mehrere wieder aufladbare Batterien, beispielsweise so genannte GEL-Akkus oder Lithium-Ionen-Akkus. Das Solarmodul ist hierbei unabhängig von dem öffentlichen Stromversorgungsnetz. Der zweite Energiespeicher dient somit als stationärer elektrischer Zwischenspeicher, der nicht mit dem Laufkran mitbewegt wird. Der zweite Energiespeicher kann analog zu dem Energiespeicher des Laufkrans eine oder mehrere wieder aufladbare Batterien umfassen, beispielsweise so genannte GEL-Akkus oder Lithium-Ionen-Akkus. Der zweite Energiespeicher ist besonders vorteilhaft, wenn die externe Energiequelle ein Solarmodul umfasst, dessen schwankende Energieerzeugung mittels des zweiten Energiespeichers ausgeglichen werden kann. Dadurch wird im Umfang der Ladekapazität des zweiten Energiespeichers eine Entkopplung von der Energieerzeugung des Solarmoduls möglich. Durch die zusätzliche Einbindung des öffentlichen Stromversorgungsnetzes zur Speisung der Ladestation beziehungsweise des zweiten Energiespeichers kann auch eine längere Phase nicht ausreichender Energieerzeugung des Solarmoduls ausgeglichen werden. So kann in vorteilhafter Weise erneuerbare Energie in Form von Solarenergie genutzt werden. Dies eignet sich insbesondere für Hallenkrane mit einem außerhalb der Halle beispielsweise auf dem Hallendach angeordnetem Solarmodul.

In vorteilhafter Weise ist hierbei vorgesehen, dass der Laufkran einen Kranantrieb zum Verfahren des Kranträgers und für das Hebezeug einen Hubantrieb zum Heben und Senken einer Last und insbesondere einen Katzantrieb zum Verfahren der Krankatze aufweist und der Energiespeicher mit diesen Antrieben verbunden ist, um den jeweiligen Antrieb mit Energie zu versorgen. Vorzugsweise ist der Energiespeicher zusätzlich zu allen vorgesehen Antrieben des Laufkrans auch mit allen weiteren elektrischen Verbrauchern des Laufkrans, beispielsweise Licht, Kransteuerung beziehungsweise Sicherheitssteuerung, verbunden, um diese mit Energie zu versorgen. Dies kann beispielsweise wie unten beschrieben über das gemeinsame interne Energieversorgungsnetz des Laufkrans erfolgen.

In vorteilhafter Weise ist vorgesehen, dass der Energiespeicher an dem Kranträger angeordnet ist. Der Energiespeicher wird also von dem Kranträger getragen und bei seinen Bewegungen mitbewegt.

In vorteilhafter Weise sind hierfür Energieübertragungsmittel vorgesehen, um Energie von der Ladestation zu dem Energiespeicher kontaktbehaftet und/oder kontaktlos zu übertragen. Für eine kontaktbehaftete Energieübertragung sind entsprechende Ladekontakte an der Ladestation und am Laufkran vorgesehen. Für eine kontaktlose, das heißt berührungslose Energieübertragung beispielsweise per elektromagnetischer Induktion sind entsprechende Spulen und elektrische Leiter am Laufkran und der Ladestation vorzusehen. Vorzugsweise sind die jeweiligen Energieübertragungsmittel im Bereich der Kranbahn beziehungsweise der Fahrwerke des Laufkrans angeordnet, so dass die Ladestation eine Art Andockstation für den Laufkran bildet.

In vorteilhafte Weise kann außerdem vorgesehen sein, dass der Energiespeicher des Laufkrans mit einem Solarmodul verbunden ist, um hierüber geladen zu werden und das Solarmodul vorzugsweise auf dem Laufkran, insbesondere auf dem Kranträger, angeordnet ist. Dies eignet sich insbesondere für im Freien installierte Laufkrane. Sofern eine ausreichende Energieerzeugung des Solarmoduls innerhalb eines Gebäudes möglich ist, kann der Laufkran auch innerhalb eines Gebäudes installiert werden.

In konstruktiv einfacher Weise kann vorgesehen sein, dass der Laufkran einen zweiten Kranträger aufweist, der sich parallel und beabstandet zu dem ersten Kranträger erstreckt, so dass die Krankatze entlang der beiden Kranträger verfahrbar ist. Der Laufkran ist dann als Zwei-Träger-Laufkran ausgebildet.

Gemäß eines vorteilhaften Verfahrens zum Laden des Energiespeichers eines entsprechenden Laufkrans ist vorgesehen, dass in einer Betriebsunterbrechung des Laufkrans der Laufkran automatisch zum Laden des Energiespeichers zu der Ladestation gefahren wird, vorzugsweise nachdem ein Lastaufnahmemittel des Laufkrans, insbesondere in die höchste Hubposition unter der Krankatze, angehoben worden ist.

Ein Ausführungsbeispiel der Erfindung wird anhand der nachfolgenden Beschreibung näher erläutert. Es zeigen:
Figur 1 einen Laufkran in einer ersten Ausführungsform und
Figur 2 den Laufkran gemäß Figur 1 in einer zweiten Ausführungsform.

Die nachfolgend beispielhaft anhand eines als Ein-Träger-Brückenkrans vorgenommenen Erläuterungen gelten entsprechend auch für andere Laufkrane im eingangs definierten Sinne, insbesondere auch für Hängekrane und Wandlaufkrane, die ebenso wie ein Brückenkran jeweils auch als Zwei-Träger-Laufkran mit zwei parallelen und voneinander beabstandeten Kranträgern ausgebildet sein können.

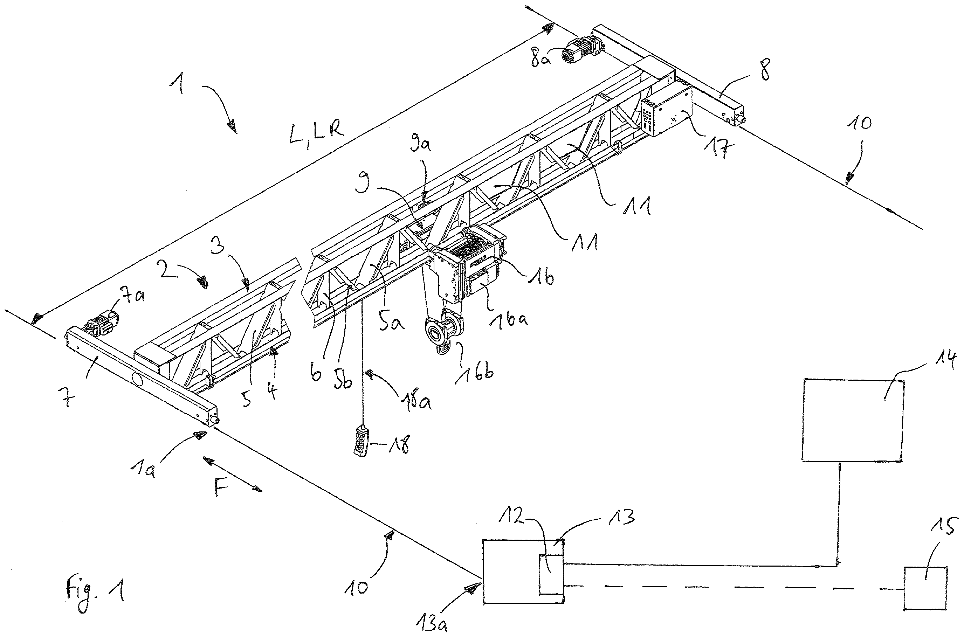

Die Figur 1 zeigt einen Laufkran 1, der als Ein-Träger-Brückenkran ausgebildet ist. Der Laufkran 1 umfasst dementsprechend einen Kranträger 2, der horizontal ausgerichtet ist und sich mit einer Länge L in seiner Längsrichtung LR erstreckt. Der Kranträger 2 ist als Fachwerkträger ausgebildet. Alternativ kann der Kranträger 2 auch als Kastenträger oder Profilträger, insbesondere Walzprofilträger, ausgebildet sein.

An den sich gegenüber liegenden Enden des Kranträgers 2 sind erste und zweite Fahrwerke 7, 8 befestigt, so dass eine in der Draufsicht im Wesentlichen doppel-T-förmige Kranbrücke ausgebildet ist. Über die Fahrwerke 7, 8 ist der Laufkran 1 entlang einer horizontalen Fahrtrichtung F quer zur Längsrichtung LR des Kranträgers 2 auf einer Kranbahn im oben definierten Sinne schienengebunden verfahrbar. Die Kranbahn umfasst dementsprechend schematisch dargestellte ortsfeste Fahrschienen 10, die von Profilträgern gebildet werden und auf denen die Fahrwerke 7, 8 mit ihren Laufrollen abrollen. Die Fahrschienen 10 sind in üblicher Weise entsprechend des Abstandes zwischen den Fahrwerken 7 und 8 parallel zueinander beabstandet. Außerdem sind die Fahrschienen 10 gegenüber einem Flurboden hochliegend angeordnet und können hierfür beispielsweise über eine geeignete Tragkonstruktion aufgeständert sein. Die Tragkonstruktion kann freistehend oder auch an sich gegenüberliegenden Gebäudewänden befestigt sein. Zur besseren Übersichtlichkeit sind der Flurboden und die Tragkonstruktion nicht dargestellt. Um den Laufkran 1 beziehungsweise dessen Kranträger 2 zu verfahren, wird das erste Fahrwerk 7 von einem ersten Elektromotor 7a und das zweite Fahrwerk 8 von einem zweiten Elektromotor 8a angetrieben. Die Elektromotoren 7a, 8a sind somit Bestandteil eines Fahrantriebs des Laufkrans 1.

An dem Kranträger 2 ist eine Krankatze 9 mit einem als Seilzug ausgebildeten Hebezeug 16 aufgehängt. Die Krankatze 9 ist über ihre Fahrwerke quer zur Fahrtrichtung F des Laufkrans 1 und entlang der Längsrichtung LR des Kranträgers 2 beziehungsweise dessen Untergurts 4 verfahrbar. Hierbei stützen sich die Fahrwerke der Krankatze 9 auf von dem Untergurt 4 gebildeten Laufflächen ab. Bei Zwei-Träger-Laufkranen können die Laufflächen auch im Bereich der Obergurte 3 der beiden Kranträger 2 angeordnet oder hiervon gebildet werden, so dass die Krankatze 9 auf und zwischen den Obergurten 3 verfährt. Um verfahren zu werden, weist die Krankatze 9 einen Katzantrieb mit einem Katzmotor 9a in Form eines weiteren Elektromotors auf. Das von der Krankatze 9 getragene Hebezeug 16 umfasst einen Hubantrieb mit einem ebenfalls als Elektromotor ausgebildeten Hubmotor 16a. Mittels des Hubmotors 16a lässt sich über ein Getriebe eine Trommel antreiben. Dadurch kann das als Seil ausgebildete Tragmittel auf die Trommel auf- oder hiervon abgewickelt werden, um ein am herabhängenden Ende des Tragmittels befestigtes und beispielsweise als Lasthaken 16b ausgebildetes Lastaufnahmemittel des Hebezeugs 16 sowie eine hieran befestigte Last heben beziehungsweise senken zu können. Es ist auch denkbar, dass das Hebezeug 16 mit einer entsprechend auf- und abwickelbaren und somit heb- und senkbaren Kette als Tragmittel ausgebildet ist.

Weitere Bestandteile des Laufkrans 1 sind eine Kransteuerung 17 und ein hiermit zum Austausch von Steuersignalen über eine Steuerleitung 18a verbundener Steuerschalter 18. Alternativ zu einem solchen kabelgebundenen Hängesteuerschalter kann der Steuerschalter 18 zum Austausch von Steuersignalen auch über eine drahtlose Steuerleitung mit der Kransteuerung 17 verbunden sein (nicht dargestellt). Durch Betätigung des Steuerschalters 18 und damit einhergehendes Übertragen von Steuersignalen an die Kransteuerung 17 können die Antriebe des Laufkrans 1, insbesondere die Elektromotoren 7a, 8a des Fahrantriebs, der Katzmotor 9a des Katzantriebs und der Hubmotor 16a des Hubantriebs, jeweils getrennt voneinander angesteuert und somit der Laufkran 1 bedient werden. Wenn der Steuerschalter 18 als Hängesteuerschalter ausgebildet ist, kann die Steuerleitung 18a auch an der Krankatze 9 befestigt sein, um diese durch entsprechendes Ziehen am Hängesteuerschalter 18 manuell entlang des Kranträgers 2 zu verfahren. In diesem Fall kann der Katzantrieb mit dem Katzmotor 9a entfallen. Es ist auch denkbar, dass mehr als eine Krankatze 9 je Kranträger 2 angeordnet ist und jeweils ein Hebezeug 16 trägt.

Die Fachwerkkonstruktion des Kranträgers 2 umfasst neben dem Obergurt 3 und dem Untergurt 4 mehrere diagonal verlaufende Streben 5 und vertikale Pfosten 6, die den Obergurt 3 mit dem Untergurt 4 verbinden. Die Streben 5 und Pfosten 6 sind jeweils flächenförmig ausgebildet. Hierbei sind die Streben 5 als Blechprofil mit einer Hauptfläche 5a mit einem im Wesentlichen rechteckigen Querschnitt ausgebildet, wobei deren Längsseiten zur Erhöhung der Beulsteifigkeit zumindest in einem mittleren Bereich in Form von Nebenflächen 5b umgekantet sind. Es ist jedoch auch denkbar, dass die Streben 5 abkantungsfrei ausgebildet sind und dementsprechend keine von der Hauptfläche 5 abgekanteten Nebenflächen 5b vorgesehen sind.

Der Laufkran 1 weist mindestens einen ersten Energiespeicher 11 auf, der als wieder aufladbare Batterie ausgebildet ist, beispielsweise als so genannter GEL-Akku oder Lithium-Ionen-Akku. Der erste Energiespeicher 11 ist mit den elektrischen Antrieben, insbesondere dem Fahrantrieb, dem Katzantrieb und dem Hubantrieb, des Laufkrans 1 verbunden, um die Antriebe mit Energie zu versorgen. Hierfür ist ein internes Energieversorgungsnetz des Laufkrans 1 vorgesehen, an das der Energiespeicher 11 und die Antriebe angeschlossen sind, beispielsweise über einen gemeinsamen oder mehrere miteinander verschaltete Zwischenkreise des internen Energieversorgungsnetzes. In gleicher Weise können außer den Antrieben auch weitere Verbraucher des Laufkrans 1 angeschlossen und von dem Energiespeicher 11 mit der zum Betrieb erforderlichen Energie gespeist werden, beispielsweise Licht und die Kransteuerung 17 beziehungsweise eine Sicherheitssteuerung des Laufkrans 1. Je nach Art der für die einzelnen Antriebe verwendeten Elektromotoren und der übrigen Verbraucher sowie des jeweiligen Zwischenkreises, erfordert der Anschluss der genannten Komponenten die Zwischenschaltung von Spannungswandlern, Wechselrichtern und/oder Gleichrichtern. Jeder der Elektromotoren kann zudem in rückspeisefähiger Art und Weise ausgebildet und an den entsprechenden Zwischenkreis angeschlossen sein, um beim generatorischen Bremsen beziehungsweise generatorischen Betrieb zurückgewonnene elektrische Energie wieder in den Zwischenkreis zu speisen. Dies gilt insbesondere für den Hubmotor 9a beim Absenken einer Last. Die zurück gespeiste Energie kann zum Laden des ersten Energiespeichers 11 oder von anderen Antrieben beziehungsweise Verbrauchern genutzt werden. Auch kann ein Bremswiderstand angeschlossen sein, für den Fall, dass der erste Energiespeicher 11 keine weitere Energie speichern kann und darüber hinaus keiner der Antriebe oder der sonstigen Verbraucher Energiebedarf hat. Über den Bremswiderstand wird dann die durch das generatorische Bremsen von den Elektromotoren zurück gespeiste Spannung in Wärme umgewandelt und somit vernichtet.

Durch den vorbeschriebenen Aufbau kann der Laufkran 1 allein durch das interne Energieversorgungsnetz des Laufkrans 1 betrieben werden. Der Betrieb des Laufkrans 1 ist damit unabhängig von einer in Bezug auf sämtliche Bewegungen des Laufkrans 1 ortsfesten externen Energiequelle möglich. Mit anderen Worten ist keine permanente Energiezuführung beziehungsweise Stromzuführung von der ortsfesten externen Energiequelle zu dem internen Energieversorgungsnetz des Laufkrans 1 in dessen laufendem Betrieb erforderlich. Eine permanente Verbindung des internen Energieversorgungsnetzes mit der ortsfesten externen Energiequelle kann damit entfallen. Dies erspart die Installation entsprechender Schleifleitungen oder Kabelverbindungen, die ansonsten in der Regel entlang der Kranbahn geführt werden, um die Verbindung zwischen internem Energieversorgungsnetz und der externen Energiequelle aufrechtzuerhalten.

In Figur 1 sind exemplarisch zwei Energiespeicher 11 dargestellt. Die Energiespeicher 11 sind am Kranträger 2 und damit am Laufkran 1 selbst befestigt. Im vorliegenden Ausführungsbeispiel werden zur Unterbringung und Anbringung der Energiespeicher 11 Aufnahmeräume der Fachwerkstruktur des Kranträgers 2 genutzt, die zwischen zwei benachbarten Streben 5 sowie dem Obergurt 3 und dem Untergurt 4 vorhanden sind. Auch andere Aufnahmeräume und Anbringungsorte am Laufkran 1 beziehungsweise dessen Kranträger 2, beispielsweise auf dessen Obergurt 3, können selbstverständlich für die Befestigung der Energiespeicher 11 genutzt werden. Dies gilt auch, wenn der Kranträger 2 nicht als Fachwerkträger, sondern als Kastenträger oder als Profilträger, insbesondere Walzprofilträger, ausgebildet ist.

Außerdem ist eine in Bezug auf sämtliche Bewegungen des Laufkrans 1 ortsfeste Ladestation 13 vorgesehen, über die der erste Energiespeicher 11 bei Bedarf Energie beziehen und wieder aufgeladen werden kann. Hierfür fährt der Laufkran 1 zu der beispielsweise an einem Ende der Kranbahn ortsfest angeordneten Ladestation 13, so dass zur Energieübertragung eine elektrische Verbindung zwischen der Ladestation 13 und dem ersten Energiespeicher 11 beispielsweise über das interne Energieversorgungsnetz oder parallel zu diesem hergestellt ist. Zu diesem Zweck sind an der Ladestation 13 und dem Laufkran 1 jeweils Energieübertragungsmittel 13a beziehungsweise 1a vorgesehen, die zusammenwirken und eine kontaktbehaftete und/oder kontaktlose Energieübertragung von der Ladestation 13 zu dem ersten Energiespeicher 11 ermöglichen. Für eine kontaktbehaftete Energieübertragung sind als Energieübertragungsmittel 1a, 13a entsprechende Ladekontakte an der Ladestation 13 und am Laufkran 1 vorgesehen. Für eine kontaktlose, das heißt berührungslose Energieübertragung beispielsweise per elektromagnetischer Induktion sind als Energieübertragungsmittel 1a, 13a entsprechende Spulen und elektrische Leiter am Laufkran 1 und der Ladestation 13 anzubringen. Vorzugsweise sind die jeweiligen Energieübertragungsmittel 1a, 13a im Bereich der Kranbahn beziehungsweise im Bereich von einem oder beiden der Fahrwerke 7, 8 des Laufkrans 1 angeordnet, so dass die Ladestation 13 eine Art Andockstation für den Laufkran 1 bildet. Die Energieübertragungsmittel 1a des Laufkrans 1 sind entsprechend mit dem ersten Energiespeicher 11 beziehungsweise dem internen Energieversorgungsnetz des Laufkrans 1 verbunden, um die von der Ladestation 13 übertragene Energie an den ersten Energiespeicher 11 leiten zu können.

Außerdem ist ein zweiter Energiespeicher 12 vorgesehen, mit dem die Ladestation 13 verbunden ist. Der zweite Energiespeicher 12 wird von einem Solarmodul 14 gespeist und kann die gespeicherte Energie über die Ladestation 13 an den ersten Energiespeicher 11 abgeben. Das Solarmodul 14 umfasst eine oder mehrere Solarzellen zur Umwandlung von Strahlungsenergie, vorzugsweise Sonnenlicht, in elektrische Energie und ist stationär und im Freien außerhalb eines Gebäudes angeordnet, beispielsweise auf oder neben einem Hallendach der Halle, in der der dementsprechend als Hallenkran ausgebildete Laufkran 1 installiert ist. Der zweite Energiespeicher 12 kann gemeinsam mit der Ladestation 13, insbesondere als Teil der Ladestation 13, innerhalb des Gebäudes oder gemeinsam mit dem Solarmodul 14 außerhalb des Gebäudes angeordnet sein, um die von dem Solarmodul 14 erzeugte Energie über eine entsprechende elektrische Leitung zu empfangen, zu speichern und über die Ladestation 13 an den ersten Energiespeicher 11 zu übertragen. Der zweite Energiespeicher 12 dient somit als stationärer elektrischer Zwischenspeicher, der anders als der erste Energiespeicher 11 nicht mit dem Laufkran 1 mitbewegt wird. Der zweite Energiespeicher 12 kann wie der erste Energiespeicher 11 eine oder mehrere wieder aufladbare Batterien umfassen, beispielsweise so genannte GEL-Akkus oder Lithium-Ionen-Akkus. Durch den zweiten Energiespeicher 12 kann die schwankende Energieerzeugung des Solarmoduls 14 ausgeglichen und somit das Laden des ersten Energiespeichers 11 im Umfang der Ladekapazität des zweiten Energiespeichers 12 von den Schwankungen der Energieerzeugung des Solarmoduls 14 entkoppelt werden.

Alternativ oder zusätzlich kann der zweite Energiespeicher 12 durch eine in Figur 1 gestrichelt dargestellte Leitung auch mit dem örtlichen öffentlichen Stromversorgungsnetz 15 verbunden sein, um hierüber geladen zu werden. Durch die Einbindung des öffentlichen Stromversorgungsnetzes 15 zur Speisung der Ladestation 13 beziehungsweise des zweiten Energiespeichers 12 kann auch eine längere Phase nicht ausreichender Energieerzeugung des Solarmoduls 14 ausgeglichen werden. Dadurch können Ausfallzeiten des Laufkrans 1 vermieden werden, wenn von dem Solarmodul 14 über längere Zeit keine Energie erzeugt wird. Auch kann der zweite Energiespeicher 12 zunächst nur mit dem Stromversorgungsnetz 15 verbunden werden, wenn noch kein Solarmodul 14 installiert ist.

Das Solarmodul 14 und das öffentliche Stromversorgungsnetz 15 bilden jeweils für sich oder gemeinsam eine stationäre beziehungsweise ortsfeste externe Energiequelle, die die Ladestation 13 beziehungsweise den hiermit verbundenen zweiten Energiespeicher 12 speist.

Insbesondere bei Betriebsunterbrechungen fährt der Laufkran 1 zu der Ladestation 13, um den ersten Energiespeicher 11 zu laden. Dies kann automatisch erfolgen, nachdem eine Bedienperson durch entsprechende Betätigung des Steuerschalters 18 eine Betriebsunterbrechung des Laufkrans 1 ausgelöst hat. Auch kann in diesem Zusammenhang das Lastaufnahmemittel 16b automatisch, insbesondere in die höchste Hubposition unter der Krankatze 9, angehoben werden bevor der Laufkran 1 in die Ladestation 13 fährt.

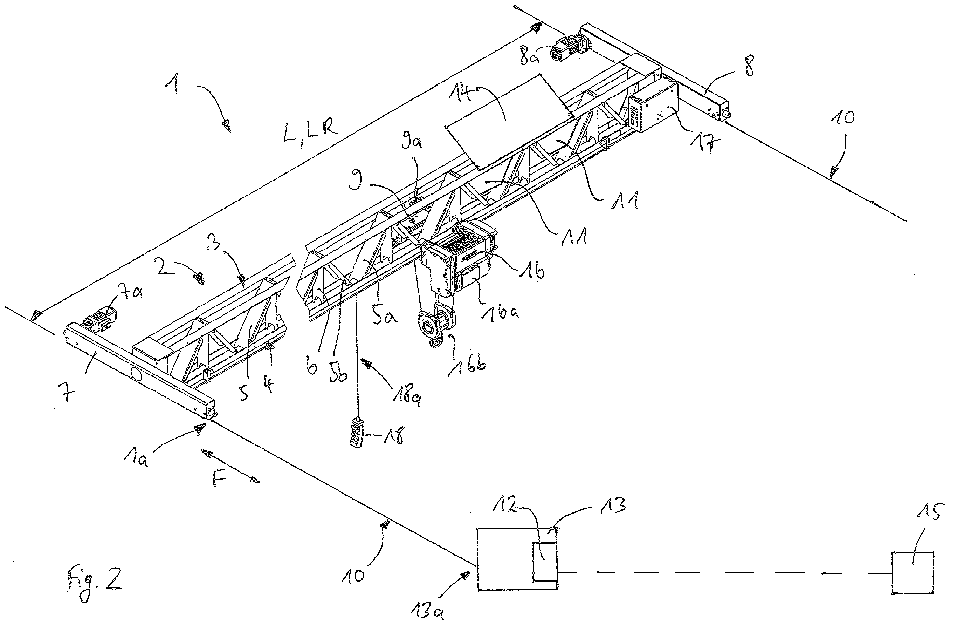

Die Figur 2 zeigt den Laufkran 1 gemäß Figur 1 in einer zweiten Ausführungsform. Der Laufkran 1 unterscheidet sich in der zweiten Ausführungsform von der ersten Ausführungsform im Wesentlichen dadurch, dass das Solarmodul 14 nicht stationär, beispielsweise auf oder neben einem Hallendach, sondern auf dem Kranträger 2 angeordnet ist und entsprechend gemeinsam mit dem ersten Energiespeicher 11 bei Bewegungen des Laufkrans 1 mitbewegt wird. Das Solarmodul 14 ist mit dem ersten Energiespeicher 11 verbunden, um den ersten Energiespeicher 11 mit der von dem Solarmodul 14 erzeugten Energie speisen beziehungsweise laden zu können. Die für diese Energieübertragung erforderliche Verbindung zwischen dem Solarmodul 14 und dem ersten Energiespeicher 11 kann beispielsweise über das interne Energieversorgungsnetz oder parallel zu diesem vorgesehen sein.

Sofern das interne Energieversorgungsnetz beziehungsweise der erste Energiespeicher 11 ausschließlich von dem Solarmodul 14 als mit dem Laufkran 1 mitbewegter externer Energiequelle gespeist werden, erfordert dies einen Betrieb des Laufkrans 1 bei Umgebungsbedingungen, insbesondere Lichtverhältnissen, die eine ausreichende Energieerzeugung durch das Solarmodul 14 ermöglichen. Die zweite Ausführungsform eignet sich daher insbesondere für einen zumindest teilweise im Freien installierten Laufkran 1.

Gemäß einer Alternative der zweiten Ausführungsform können jedoch auch Schwankungen in der Energieerzeugung des Solarmoduls 14 ausgeglichen werden, indem als externe Energiequelle zusätzlich auch eine an das öffentliche Stromversorgungsnetz 15 angeschlossene Ladestation 13 gemäß der ersten Ausführungsform installiert wird. Analog zu der ersten Ausführungsform kann ebenfalls ein zweiter Energiespeicher 12 eingebunden werden.

Die Ausführungen zu der ersten Ausführungsform gemäß Figur 1 gelten im Übrigen entsprechend auch für Figur 2.

### Bezugszeichenliste

- 1: Laufkran
- 1a: Energieübertragungsmittel
- 2: Kranträger
- 3: Obergurt
- 4: Untergurt
- 5: Strebe
- 5a: Hauptfläche
- 5b: Nebenfläche
- 6: Pfosten
- 7: erstes Fahrwerk
- 7a: erster Elektromotor
- 8: zweites Fahrwerk
- 8a: zweiter Elektromotor
- 9: Krankatze
- 9a: Katzmotor
- 10: Fahrschiene
- 11: erster Energiespeicher
- 12: zweiter Energiespeicher
- 13: Ladestation
- 13a: Energieübertragungsmittel
- 14: Solarmodul
- 15: Stromversorgungsnetz
- 16: Hebezeug
- 16a: Hubmotor
- 16b: Lastaufnahmemittel
- 17: Kransteuerung
- 18: Steuerschalter
- 18a: Steuerleitung

- F: Fahrtrichtung
- L: Länge
- LR: Längsrichtung

## Patentansprüche

1. Laufkran (1) mit einem sich horizontal erstreckenden Kranträger (2), der entlang einer Kranbahn schienengebunden verfahrbar ist, wobei die Kranbahn ortsfeste und als Fahrschiene dienende Profilträger umfasst, die Fahrschienen sich voneinander beabstandet und parallel zueinander in horizontaler Fahrtrichtung des Laufkrans (1) erstrecken und hoch oberhalb eines Flurbodens angeordnet sind, und mit einer Krankatze (9), die entlang des Kranträgers (2) verfahrbar ist und ein Hebezeug (16) zum Heben und Senken einer Last trägt, wobei das Hebezeug (16) ein als Seil oder Kette ausgebildetes Tragmittel aufweist und der Laufkran (1) elektrische Antriebe für Bewegungen des Laufkrans (1) aufweist, **dadurch gekennzeichnet, dass** der Laufkran (1) einen Energiespeicher (11) aufweist, der mit den Antrieben verbunden ist, um die Antriebe mit Energie zu versorgen und dass eine Ladestation (13) vorgesehen ist, die von dem Laufkran (1) so anfahrbar ist, dass der Energiespeicher (11) bei Bedarf Energie von der Ladestation (13) beziehen kann, wenn der Laufkran (1) in der Ladestation (13) ist, wobei die Ladestation (13) Energie von einer externen Energiequelle bezieht, die ein Solarmodul (14) und/oder ein öffentliches Stromversorgungsnetz (15) umfasst, und dass ein zweiter Energiespeicher (12) vorgesehen ist, der mit der Ladestation (13) und der externen Energiequelle verbunden ist, um von der externen Energiequelle Energie zu beziehen, zu speichern und über die Ladestation (13) an den Energiespeicher (11) des Laufkrans (1) abzugeben.

2. Laufkran (1) nach Anspruch 1, **dadurch gekennzeichnet, dass** der Energiespeicher (11) mit weiteren elektrischen Verbrauchern des Laufkrans (1) verbunden ist, um diese mit Energie zu versorgen.

3. Laufkran (1) nach einem der vorherigen Ansprüche, **dadurch gekennzeichnet, dass** der Energiespeicher (11) an dem Kranträger (2) angeordnet ist.

4. Laufkran (1) nach einem der vorherigen Ansprüche, **dadurch gekennzeichnet, dass** Energieübertragungsmittel (1a, 13a) vorgesehen sind, um Energie von der Ladestation (13) zu dem Energiespeicher (11) kontaktbehaftet und/oder kontaktlos zu übertragen.

5. Laufkran (1) nach einem der vorherigen Ansprüche, **dadurch gekennzeichnet, dass** der Energiespeicher (11) des Laufkrans (1) mit einem Solarmodul (14) verbunden ist, um hierüber geladen zu werden und das Solarmodul (14) vorzugsweise auf dem Laufkran (1), insbesondere auf dem Kranträger (2), angeordnet ist.

6. Laufkran (1) nach einem der vorherigen Ansprüche, **dadurch gekennzeichnet, dass** der Laufkran (1) einen zweiten Kranträger (2) aufweist, der sich parallel und beabstandet zu dem ersten Kranträger (2) erstreckt, so dass die Krankatze (9) entlang der beiden Kranträger (2) verfahrbar ist.

7. Verfahren zum Laden des Energiespeichers (11) eines Laufkrans (1) nach einem der vorherigen Ansprüche, **dadurch gekennzeichnet, dass** in einer Betriebsunterbrechung des Laufkrans (1) der Laufkran (1) automatisch zum Laden des Energiespeichers (11) zu der Ladestation (13) gefahren wird, vorzugsweise nachdem ein Lastaufnahmemittel (16b) des Laufkrans (1), insbesondere in die höchste Hubposition unter der Krankatze (9), angehoben worden ist.

## Claims

1. Travelling crane (1) having a horizontally extending crane girder (2) which can travel rail-bound along a craneway, wherein the craneway includes stationary profile girders serving as travel rails, the travel rails extend spaced apart from each other and in parallel with each other in the horizontal direction of travel of the travelling crane (1) and are arranged high above a floor, and having a crane trolley (9) which can travel along the crane girder (2) and carries a lifting device (16) for raising and lowering a load, wherein the lifting device (16) comprises a carrying means formed as a cable or chain and the travelling crane (1) comprises electrical drives for movements of the travelling crane (1), **characterised in that** the travelling crane (1) comprises an energy storage device (11) which is connected to the drives in order to supply the drives with energy, and **in that** a charging station (13) is provided which can be approached by the travelling crane (1) in such a manner that the energy storage device (11) can draw energy from the charging station (13) as required when the travelling crane (1) is in the charging station (13), wherein the charging station (13) draws energy from an external energy source which includes a solar module (14) and/or a public power supply network (15), and **in that** a second energy storage device (12) is provided which is connected to the charging station (13) and the external energy source in order to draw energy from the external energy source, to store said energy and to output said energy to the energy storage device (11) of the travelling crane (1) via the charging station (13).

2. Travelling crane (1) as claimed in claim 1, **characterised in that** the energy storage device (11) is connected to other electrical consumers of the travelling crane (1) in order to supply these consumers with energy.

3. Travelling crane (1) as claimed in any one of the preceding claims, **characterised in that** the energy storage device (11) is arranged on the crane girder (2).

4. Travelling crane (1) as claimed in any one of the preceding claims, **characterised in that** energy transfer means (1a, 13a) are provided in order to transfer energy from the charging station (13) to the energy storage device (11) in a contacted and/or contactless manner.

5. Travelling crane (1) as claimed in any one of the preceding claims, **characterised in that** the energy storage device (11) of the travelling crane (1) is connected to a solar module (14) in order to be charged thereby and the solar module (14) is preferably arranged on the travelling crane (1), in particular on the crane girder (2).

6. Travelling crane (1) as claimed in any one of the preceding claims, **characterised in that** the travelling crane (1) comprises a second crane girder (2) which extends in parallel with and spaced apart from the first crane girder (2) so that the crane trolley (9) can travel along the two crane girders (2).

7. Method for charging the energy storage device (11) of a travelling crane (1) as claimed in any one of the preceding claims, **characterised in that** during an interruption in operation of the travelling crane (1), the travelling crane (1) is automatically moved to the charging station (13) for charging the energy storage device (11), preferably after a load picking-up means (16b) of the travelling crane (1) has been raised, in particular to the highest lifting position below the crane trolley (9).

## Revendications

1. Pont roulant (1) comprenant une poutre de pont-roulant s'étendant horizontalement (2) et pouvant être déplacée sur des rails le long d'un chemin de roulement de pont roulant, le chemin de roulement de pont roulant comprenant des poutres profilées fixes et servant de rail de roulement, les rails de roulement étant espacés les uns des autres et s'étendant parallèlement les uns aux autres dans la direction horizontale de roulement du pont roulant (1) et étant disposés en hauteur au-dessus d'un sol, et comprenant un chariot de pont-roulant (9) qui peut se déplacer le long de la poutre de pont-roulant (2) et qui porte un treuil (16) destiné à soulever et abaisser une charge, le treuil (16) comportant un élément porteur conçu comme un câble ou une chaîne et le pont roulant (1) comportant des entraînements électriques destinés à déplacer le pont roulant (1), **caractérisé en ce que** le pont roulant (1) comporte un accumulateur d'énergie (11) qui est relié aux entraînements pour alimenter les entraînements en énergie et **en ce qu'**une station de charge (13) est prévue qui peut être approchée par le pont roulant (1) de sorte que l'accumulateur d'énergie (11) puisse tirer de l'énergie de la station de charge (13) en cas de besoin, lorsque le pont roulant (1) est dans la station de charge (13), la station de charge (13) tirant de l'énergie d'une source d'énergie externe qui comprend un module solaire (14) et/ou un réseau d'alimentation en courant public (15), et **en ce qu'**un deuxième accumulateur d'énergie (12) est prévu qui est relié à la station de charge (13) et à la source d'énergie externe pour tirer de l'énergie de la source d'énergie externe, la stocker et la fournir à l'accumulateur d'énergie (11) du pont roulant (1) par le biais de la station de charge (13).

2. Pont roulant (1) selon la revendication 1, **caractérisé en ce que** l'accumulateur d'énergie (11) est relié à d'autres consommateurs électriques du pont roulant (1) pour leur fournir de l'énergie.

3. Pont roulant (1) selon l'une des revendications précédentes, **caractérisé en ce que** l'accumulateur d'énergie (11) est disposé sur la poutre (2) pont-roulant.

4. Pont roulant (1) selon l'une des revendications précédentes, **caractérisé en ce que** des moyens de transfert d'énergie (1a, 13a) sont prévus pour transférer l'énergie de la station de charge (13) à l'accumulateur d'énergie (11) avec contact et/ou sans contact.

5. Pont roulant (1) selon l'une des revendications précédentes, **caractérisé en ce que** l'accumulateur d'énergie (11) du pont roulant (1) est relié à un module solaire (14) pour être chargé par celui-ci et le module solaire (14) est disposé de préférence sur le pont roulant (1), en particulier sur la poutre (2) du pont roulant.

6. Pont roulant (1) selon l'une des revendications précédentes, **caractérisé en ce que** le pont roulant (1) comporte une deuxième poutre (2) qui s'étend parallèlement à et à distance de la première poutre (2), de sorte que le chariot (9) du pont-roulant puisse être déplacé le long des deux poutres (2) du pont-roulant.

7. Procédé de charge de l'accumulateur d'énergie (11) d'un pont roulant (1) selon l'une des revendications précédentes, **caractérisé en ce que**, en cas d'interruption de fonctionnement du pont roulant (1), le pont roulant (1) est déplacé automatiquement vers la station de charge (13) pour charger l'accumulateur d'énergie (11), de préférence après qu'un moyen de réception de charge (16b) du pont roulant (1) a été soulevé, en particulier dans la position de levage la plus élevée sous le chariot (9) du pont-roulant.
